# EUROPÄISCHE PATENTSCHRIFT

(11) **EP 3 250 097 B1**
(45) Veröffentlichungstag und Bekanntmachung des Hinweises auf die Patenterteilung: **13.03.2019**
(21) Anmeldenummer: 16700325.0
(22) Anmeldetag: 04.01.2016
(51) Int. Cl.: A47J 43/046, A47J 43/07

(54) **MISCHWERKZEUGVERRIEGELUNG FÜR EIN KÜCHENGERÄT**
MIXING TOOL LOCK FOR A KITCHEN APPLIANCE
VERROUILLAGE D'OUTIL MÉLANGEUR POUR ROBOT MÉNAGER

(30) Priorität: 30.01.2015 DE 102015201699
(43) Veröffentlichungstag der Anmeldung: 06.12.2017
(73) Patentinhaber: BSH Hausgeräte GmbH, 81739 München (DE)
(72) Erfinder: KOSCAK, Ales, 6230 Postojna (SI); UPLAZNIK, Marko, 3312 Prebold (SI); KNEZ, Simon, 3311 Sempeter v savinjski dollini (SI)
(86) Internationale Anmeldenummer: PCT/EP2016/050017
(87) Internationale Veröffentlichungsnummer: WO 2016/120021

(56) Entgegenhaltungen:
- EP-A1- 2 005 869
- WO-A1-00/13563
- WO-A1-00/24302
- CN-A- 103 976 667
- US-A- 4 889 248
- US-A1- 2002 176 320

## Beschreibung

### Gebiet der Erfindung

Die Erfindung betrifft das Gebiet der Küchengeräte zum Kneten, Mischen oder Zerkleinern von Zutaten. Genauer betrifft die Erfindung eine Mischwerkzeugverriegelung für ein Küchengerät wie insbesondere einen Tischmixer.

### Hintergrund der Erfindung

Küchengeräte zum Mischen oder Zerkleinern von Zutaten sind aus dem Stand der Technik wohlbekannt. Die Zutaten werden zunächst in einen Behälter gegeben, in den ein Mischwerkzeug hineinragt. Das über eine oder mehrere Wellen antreibbare Mischwerkzeug kann je nach Aufgabenstellung einen oder mehrere Knethaken, Rührbesen oder eine Anordnung von Messern umfassen. Durch je nach Aufgabenstellung mehr oder minder schnelle Rotation des Mischwerkzeugs um eine oder zwei Rotationsachsen werden die Zutaten geknetet, gerührt bzw. zerkleinert. Die Rotation kann in eine oder auch beide Richtungen (uni- oder bidirektional) erfolgen.

Neben Handgeräten, wie sie beispielsweise aus der Druckschrift EP 1 230 883 A2 bekannt sind, und bei denen Mischwerkzeug und Behälter nicht miteinander verbunden sind, werden insbesondere für länger andauernde Arbeiten Standgeräte verwendet. Eine derartige Vorrichtung ist beispielsweise in der Druckschrift DE 195 39 382 C1 gezeigt. Bei Standgeräten sind Mischwerkzeug und Behälter über ein gemeinsames Gehäuse miteinander verbunden. Das Mischwerkzeug ragt dabei von oben in den dann oben offenen Behälter hinein, oder der Behälter weist in seiner Unterseite eine Bodenöffnung auf, durch welche das Mischwerkzeug von oben hindurchgeführt wird.

Dichtungen stellen sicher, dass die Zutaten den Behälter nicht durch die Bodenöffnung verlassen. Mittels einer Verriegelung wird erreicht, dass das Mischwerkzeug während der Benutzung sicher mit dem Behälter verbunden bleibt.

Nach der Benutzung müssen Mischwerkzeug und Behälter typischerweise gereinigt werden. Eine gemeinsame Reinigung ist häufig jedoch nachteilig, wenn die Mischwerkzeuge Komponenten enthalten, die bei einer Reinigung zusammen mit dem Behälter im Geschirrspüler Schaden nehmen könnten. Vorzugsweise werden daher Mischwerkzeug und Behälter vor der Reinigung voneinander getrennt und separat gereinigt.

Das Trennen bzw. die Montage erfolgt dabei vorzugsweise ohne spezielle Werkzeuge mittels einfacher, manuell bedienbarer Mechanismen. Ein Standgerät mit Behälter und einem manuell betätigbaren Verriegelungsmechanismus für das Mischwerkzeug ist aus der Druckschrift EP 1 731 068 A1 bekannt. Das in einem Werkzeughalter rotierbar gelagerte Mischwerkzeug muss zur Montage von oben in den Behälter eingesetzt, durch die Bodenöffnung geführt und dort festgehalten werden, während von der Unterseite ein ringförmiger Gegenhalter derart an der Behälterunterseite und über der Mischwerkzeug-Antriebsseite positioniert wird, dass die dafür vorgesehenen Fixierungskomponenten des Gegenhalters auch tatsächlich mit an der Mischwerkzeug-Antriebsseite vorhandenen Haltekomponenten interagieren können.

Beim Lösen des Mischwerkzeugs aus dem Gegenhalter muss dieser zunächst entriegelt werden, anschließend wird er vom Behälter abgenommen, und das Werkzeug kann durch das Innere des Behälters entnommen werden. Der entriegelte Gegenhalter kann während der Abnahme jedoch leicht fallengelassen werden; gleichermaßen kann das dann plötzlich freigegebene Mischwerkzeug in den Behälter fallen und beschädigt werden oder zu Verletzungen führen. Das Durchstecken der Mischwerkzeug-Antriebsseite durch die Bodenöffnung und das gleichzeitige Halten sowohl des Behälters als auch des Gegenhalters ist umständlich. Zudem kann die genaue Positionierung schwierig sein, da der Gegenhalter die Mischwerkzeug-Antriebsseite verdecken kann.

Ein weiteres Küchengerät ist aus der Druckschrift EP 2 404 536 B1 bekannt, die einen Behälter und eine Verriegelungseinrichtung umfasst, in der ein Werkzeughalter rotierbar gelagert ist. Dabei ist die Verriegelungseinrichtung derart ausgestaltet, dass sie ein Trennen der Verriegelungseinrichtung von dem Behälter nur in einer bestimmten Position des Behälters zulässt, und die Trennung der Verriegelungseinrichtung vom Behälter in einer davon unterschiedlichen Position, insbesondere einer Position in der die Küchenmaschine/das Küchengerät betrieben wird, unterbindet beziehungsweise verbietet. Dadurch kann ein ungewolltes Lösen der Verriegelungseinrichtung von einem damit verbundenen Behälter sichergestellt werden.

In der US-Patentanmeldung US 2002/176320 A1 ist eine Basiseinheit für einen Mixer beschrieben, die mit einem Behälter einer Küchenmaschine, einem Mischerbehälter und einem Getränkebehälter verwendet werden kann. Der Mischerbehälter enthält eine neuartige Messeranordnung, die Messerflügel im Stil einer Küchenmaschine sowie Messerflügel vom Typ eines Mixers aufweist. Eine Werkzeugbasis für die Messeranordnung kann mit dem unteren Ende des Mischerbehälters in Eingriff gebracht werden. Programme mit vorprogrammierten Motorbefehlen für gewünschte Operationen werden im Speicher abgelegt und können von einem Benutzer auf einer Benutzeroberfläche ausgewählt werden.

Die europäische Patentanmeldung EP 2 005 869 A1 beschreibt eine Küchenmaschine zur Nahrungsmittelzubereitung wie beispielsweise einen Mixer, welche ein Gehäuse umfasst, das einen Motor mit einem Antriebselement umschließt. Der Arbeitsbehälter weist einen Mantel auf, der auf einem abnehmbaren Sockel befestigt ist. Der Aufnahmesitz umfasst mindestens ein Positionierelement, das mit einer am Arbeitsbehälter angeordneten Führungsnut zusammenwirkt, um den Arbeitsbehälter auf dem Aufnahmesitz winkelmäßig zu positionieren. Der abnehmbare Sockel trägt ein Drehwerkzeug mit einer Welle, deren unteres Ende einen Verbinder aufweist, der dazu ausgelegt ist, mit dem Antriebselement zu koppeln. Die Führungsnut umfasst einen ersten Abschnitt, der auf dem abnehmbaren Sockel angeordnet ist und einen zweiten Abschnitt, der auf dem unteren Teil des Gehäuses angeordnet ist, wobei der erste und zweite Abschnitt der Führungsnut zueinander ausgerichtet sind, wenn der Mantel richtig auf dem abnehmbaren Sockel befestigt ist und winklig versetzt sind, wenn der Mantel nicht richtig auf dem abnehmbaren Sockel montiert ist.

Die internationale Patentanmeldung WO 2000/13563 A1 beschreibt eine Vorrichtung zur Nahrungsmittelverarbeitung, die auf einem Sockel mit einem elektrischen Motor montiert werden kann. Die Vorrichtung umfasst einen Behälter, der an der Basis angebracht werden kann, und eine mit dem Behälter verbundene Trägeranordnung für ein Bearbeitungswerkzeug mit einem Träger, der abnehmbar in einer Öffnung im Boden des Behälters befestigt ist. Durch den Träger verläuft eine Drehachse mit einem Werkzeug zur Nahrungsmittelverarbeitung. Der Behälter umfasst Verriegelungsmittel, die sich in einer Ebene quer zur Achse des Lebensmittelbearbeitungswerkzeugs bewegen, um in eine Struktur des Trägers einzugreifen, wenn der Träger axial in dem Behälter in Eingriff gebracht wird. Dabei ist das Verriegelungsmittel durch einen am Behälter angebrachten Steuerknopf betätigbar.

Die chinesische Patentanmeldung CN 103 976 667 A beschreibt einen Rührbecher. Ein Becherkörper ist lösbar an einem mit einer Antriebsquelle versehenen Sitz befestigt. Am unteren Ende des Becherkörpers ist eine ringförmige Trägerplattform vorgesehen. die mit der Seitenwand des Becherkörpers verbunden ist. Eine Verbindungshülse erstreckt sich von der ringförmigen Trägerplattform nach unten, wobei in die Verbindungshülse eine mit einem Heizkörper versehene Multifunktionsscheibe lösbar eingeschoben und mit einem speziell geformten Dichtungsring verbunden ist. In der Multifunktionsscheibe ist eine rotierende Welle angebracht, wobei sich ein Ende der rotierenden Welle nach oben in den Becherkörper erstreckt und mit einem Rührmesser verbunden ist. Das andere Ende der rotierenden Welle erstreckt sich aus dem Boden der Multifunktionsscheibe heraus und ist mit einem Koppler versehen, der mit der Antriebsquelle verbunden ist. Der Rührbecher umfasst eine Verriegelungshülse, die die Multifunktionsscheibe zusammendrückt.

Die US-Patentanmeldung US 4 889 248 A beschreibt eine Behälterkappe und einen Mischeradapter zum Erleichtern der Verbindung eines Standardbehälters direkt mit einem Standardmixer. Der Mischer weist eine Kappenanordnung auf, die es ermöglicht, einen herkömmlichen Mischerbehälter in leicht lösbarem Eingriff aufzunehmen. Der Mischer weist auch rotierende Schneidklingen auf, die innerhalb der Befestigungseinrichtung entfernbar angeordnet sind. Die Behälterkappe und der Mischeradapter umfassen eine Kappenanordnung für einen mit Gewinde versehenen, leicht lösbaren Eingriff mit dem Behälter. Die Kappenanordnung weist eine allgemein kreisförmige Konfiguration mit einer Oberseite und ringförmigen Seiten auf, wobei die ringförmigen Seiten Innengewinde enthalten und wobei die Kappenanordnung ferner Außengewindemittel für einen leicht lösbaren Schraubeingriff mit der Befestigungseinrichtung umfassen. Die Behälterkappe und der Mischeradapter ermöglichen einem Benutzer, einen Standardbehälter, der ein mit der Befestigungseinrichtung nicht kompatibles Gewinde aufweist, mit dem Standardmischer zu verbinden und den darin befindlichen Inhalt direkt zu mischen oder zu verarbeiten, ohne dass dazwischenliegende Utensilien oder spezielle Mischbehälter erforderlich sind.

Die internationale Patentanmeldung WO 2000/24302 A1 betrifft ein Zubehörteil für Küchenmaschinen mit einem Behälter, einem drehbaren Werkzeug, einem Träger für das Werkzeug und einem Kupplungsglied, mit dem das Werkzeug mit einem Antriebselement gekoppelt werden kann, das in einem Hauptgehäuse einer Küchenmaschine angeordnet ist, wobei der Behälter mit dem Träger lösbar verbunden ist. Das Zubehörteil ist mit einem Sicherheitselement und einer Verriegelungsvorrichtung versehen, die mit dem Sicherheitselement zusammenwirkt. Das Sicherheitselement kann relativ zu dem Kopplungselement aus einer ersten Position, in der das Sicherheitselement verhindert, dass das Kopplungselement mit dem Antriebselement gekoppelt wird, in eine zweite Position verschoben werden, in der das Sicherheitselement dem Kopplungselement ermöglicht, mit dem Antriebselement gekoppelt zu werden, wobei die Verriegelungsvorrichtung das Sicherheitselement in seiner ersten Position verriegelt, wenn der Behälter von dem Träger entkoppelt ist und das Sicherheitselement freigibt, wenn der Behälter mit dem Träger gekoppelt ist. Somit wird verhindert, dass das Werkzeug durch das Antriebselement angetrieben werden kann, wenn der Behälter nicht mit der Halterung gekoppelt ist, so dass der Benutzer des Zubehörs nicht durch das sich drehende Werkzeug verletzt werden kann.

### Der Erfindung zugrundeliegende Aufgabe

Der Erfindung liegt die Aufgabe zugrunde, eine Verriegelungseinrichtung für das Mischwerkzeug eines Küchengerätes bereitzustellen, welche ein einfaches Entfernen des Mischwerkzeugs vom bzw. Montieren desselben am Behälter erlaubt.

### Erfindungsgemäße Lösung

Die Aufgabe wird durch eine Verriegelungseinrichtung gemäß Hauptanspruch 1, sowie ein Küchengerät gemäß nebengeordnetem Anspruch 13 gelöst. Vorteilhafte Ausführungsformen sind den Unteransprüchen, der nachfolgenden Beschreibung sowie den Figuren zu entnehmen.

Richtungsangaben wie Oben, Unten, Oberseite und Unterseite orientieren sich an der typischen Positionierung der jeweiligen Komponente in Einbaulage. Dabei wird davon ausgegangen, dass sich unterhalb des von oben befüllbaren Behälters die Verriegelungseinrichtung befindet, welche ihrerseits oberhalb eines Antriebs oder einer sie aufnehmenden Halterung des Gehäuses des Küchengerätes angeordnet ist. "Axial" bedeutet parallel zu der oder den Rotationsachse(n) des Mischwerkzeugs, "radial" bezeichnet dazu lotrecht verlaufende Richtungen.

Die Verriegelungseinrichtung dient dem Fixieren eines Mischwerkzeugs im Behälter eines Küchengerätes. Als Mischwerkzeug kommen insbesondere Knethaken, Rührbesen oder Messer in Betracht, die dem Kneten, Mischen bzw. Zerkleinern der Zutaten dienen. Der Behälter ist typischerweise fest mit dem Küchengerät, das bevorzugt eine als Standgerät ausgebildete Vorrichtung wie eine Knetmaschine, eine Rührvorrichtung ("Mixer") oder eine Zerkleinerungsvorrichtung ("Crusher") ist, verbunden.

Die Verriegelungseinrichtung umfasst einen Werkzeughalter, in dem das Mischwerkzeug rotierbar gelagert ist. Mit anderen Worten, der (Misch-)Werkzeughalter dient der drehbaren Lagerung der Rotationswelle(n) des Mischwerkzeugs. Der Werkzeughalter hat eine dem Mischwerkzeug zugewandte Werkzeugseite und eine diesem abgewandte, einem Antrieb zugewandte Antriebsseite. Ebenso weist das Mischwerkzeug eine Werkzeug- und Antriebsseite auf.

Außerdem umfasst die Verriegelungseinrichtung ein Mittel zum Fixieren des Werkzeughalters. Mit diesem Mittel wird der Werkzeughalter relativ zum Behälter fixiert, so dass er im fixierten Zustand relativ zum Behälter weder axial oder radial verschiebbar noch rotierbar ist.

Erfindungsgemäß ist der Werkzeughalter dadurch gekennzeichnet, dass er außerdem auch ein zum Entfernen des Werkzeughalters, ggf. mit daran angeordnetem Mischwerkzeug, vom Behälter vorgesehenes Mittel zum Entfernen aufweist. Dieses Mittel dient demnach speziell dazu, den Werkzeughalter, vorzugsweise mit daran angeordnetem Mischwerkzeug, während und nach dem Lösen des Werkzeughalters vom Behälter sicher greifen, halten und handhaben zu können. Somit wird die Gefahr des versehentlichen Fallenlassens des Werkzeughalters zusammen mit dem Werkzeug, die bei der Handhabung der aus dem Stand der Technik bekannten Werkzeughalter für Mischwerkzeuge von Küchengeräten gegeben ist, wirksam unterbunden.

Das Mittel zum Entfernen ist ein mit dem Werkzeughalter rotierbar verbundener und aus diesem herausklappbarer Griff. Durch rotatorisches Lagern des Griffes in oder an der Innenwand des Hohlraums kann dieser vom Benutzer aus dem Innenraum herausgeklappt werden. Alsdann kann der Griff Zugkräfte zum Herausziehen des Werkzeughalters aus seinem Sitz, und bevorzugt auch umgekehrt Druckkräfte zum Hineindrücken des Werkzeughalters in seinen Sitz aufnehmen, die von der Hand des Benutzers ohne die Notwendigkeit von Werkzeug bereitgestellt werden können. Die rotatorische Lagerung ist - im Gegensatz zu einer Steck- oder Schraublösung - eine besonders einfach realisierbare Konstruktion.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche und werden nachfolgend beschrieben.

Vorzugsweise ist das Mittel zum Entfernen ein Axialkräfte aufnehmendes und an den Werkzeughalter weiterleitendes mechanisches Bauteil. Die Axialkräfte können durch die Hand eines Benutzers bereitgestellt werden; durch Weiterleitung der Axialkräfte an den Werkzeughalter ist erreichbar, dass dieser nach vorheriger Entriegelung aus seinem Sitz herausgezogen werden kann. Ein Axialkräfte aufnehmendes Bauteil hat den Vorteil, dass derartige Kräfte unmittelbar und einfach durch einen Benutzer, der den Werkzeughalter aus dem Behälter ziehen möchte, bereitgestellt werden können. Zudem entspricht die axiale Bewegungsrichtung der vom Benutzer intuitiv erwarteten Bewegungsrichtung beim Entfernen des Werkzeughalters.

Nach einer anderen Ausführungsform ist das Mittel zu Entfernen ein elektromagnetisch arbeitendes Bauteil, bei welchem die Axialbewegung des Werkzeughalters durch magnetische Anziehungs- bzw. Abstoßungskräfte zwischen ihm und seinem Sitz verursacht wird. Ein derartiges Mittel zu Entfernen weist den Vorteil auf, beispielsweise auch fernbedienbar oder durch eine im Küchengerät vorhandene Elektronik ver- und entriegelbar zu sein.

Nach einer bevorzugten Ausführungsform der Verriegelungseinrichtung ist das Mittel zum Entfernen ein im peripheren Bereich des Innenraums des Werkzeughalters aufbewahrbarer, mit dem Werkzeughalter verbundener Griff. Insbesondere kann der Werkzeughalter einen Hohlraum aufweisen, der von Außen, insbesondere von der dem Behälter abgewandten Unterseite des Werkzeughalters, zugänglich ist, und in dem das als Griff ausgestaltete Mittel zum Entfernen unterbringbar oder untergebracht ist. Ein derartiger Griff hat den Vorteil, dass er Platz sparend unterbringbar ist, und vorteilhafterweise nur dann in Erscheinung tritt, wenn er tatsächlich benötigt wird. Bevorzugt ist der Griff bogenförmig wie besonders bevorzugt in etwa halbkreisförmig ausgestaltet und an seinen beiden Enden drehbar in oder an der Innenwand des Hohlraums gelagert.

Vorzugsweise wirkt das Mittel zum Fixieren mechanisch mit einer den Werkzeughalter fixierend aufnehmenden Komponente zusammen, auf die später noch eingegangen wird, und die einen Sitz für den Werkzeughalter bereitstellt, in welchem er fixierbar ist. Ein mechanisches Zusammenwirken hat den Vorteil, dass hierfür zu keinem Zeitpunkt z.B. elektrische Energie benötigt wird.

Nach einer anderen Ausführungsform wirkt das Mittel zum Fixieren permanentmagnetisch oder elektromagnetisch mit der den Werkzeughalter fixierend aufnehmenden Komponente zusammen. Zum Herstellen des Fixierungszustandes können Permanentmagnete, die zunächst voneinander beabstandet sind, mechanisch oder elektromotorisch in Deckung gebracht werden. Elektromagnete können mittels Stromdurchfluss eingeschaltet und zur Herstellung der zur Fixierung notwendigen Kräfte verwendet werden. Demnach ist der Vorteil einer solchen Lösung in der möglichen Fernbetätigbarkeit und/oder Ansteuerbarkeit mittels einer im Küchengerät vorgesehenen Elektronik zu sehen.

Nach einer weiteren Ausführungsform der Verriegelungseinrichtung weist das Mittel zum Fixieren radial den Werkzeughalter überragende, in ihm rotierbar und exzentrisch gelagerte Zapfen auf. Die Zapfen sind zum Eingriff in korrespondierende Aussparungen der den Werkzeughalter fixierend aufnehmenden Komponente vorgesehen. Aufgrund der exzentrischen Lagerung wird im Wege der Rotation der axiale Abstand der Zapfenachsen relativ zum Werkzeughalter verändert. Sind die Zapfen im Eingriff mit den korrespondierenden Aussparungen, führt die Rotation zu einer axialen Bewegung des Werkzeughalters. Somit können der Werkzeughalter und die ihn fixierend aufnehmende Komponente bei Verriegelung in axialer Richtung gegeneinander gepresst werden. Zur Entriegelung ist die Rotation des Mittels zum Fixieren in entgegengesetzter Richtung durchzuführen. Eine solche Konstruktion ist besonders einfach realisierbar und robust. Zudem stellt eine solche Konstruktion auf einfache Weise in axialer Richtung wirkende Kräfte bereit, die zum Aneinanderpressen des Werkzeughalters mit der ihn fixierend aufnehmenden Komponente dienen können.

Als den Werkzeughalter fixierend aufnehmende Komponente kommt zunächst der Behälter selber in Betracht. Mit anderen Worten, der Behälter selber weist im Bereich seiner Unterseite die korrespondierenden Aussparungen auf, so dass der Werkzeughalter unmittelbar mit dem Behälter verbindbar ist. Nach einer weiteren Ausführungsform kann diese Komponente ein Gegenhalter sein, auf den weiter unten detailliert eingegangen wird.

Nach einer besonders bevorzugten Ausführungsform der Verriegelungseinrichtung sind das Mittel zum Fixieren und das Mittel zum Entfernen ein gemeinsames Bauteil. Mit anderen Worten, beide Funktionalitäten werden durch ein einziges Bauteil bereitgestellt, welches demnach sowohl als ein Axialkräfte aufnehmendes und an den Werkzeughalter weiterleitendes mechanisches Bauteil ist, als auch dem Fixieren, also dem Ver- und Entriegeln des Werkzeughalters in der ihn aufnehmenden Komponente, dient. Dementsprechend ist das Bauteil besonders bevorzugt als bogenförmiger und aus dem peripheren Innenraum des Werkzeughalters herausklappbarer Griff ausgestaltet, der ebenfalls besonders bevorzugt an seinen beiden Enden die weiter oben beschriebenen Zapfen aufweist. Durch Rotation des Griffes aus dem Innenraum entriegelt er den Werkzeughalter von der ihn aufnehmenden Komponente, und dient alsdann als sichere Haltemöglichkeit zum bequemen Herausziehen des Werkzeughalters aus seinem Sitz. In gleicher Weise kann der zunächst vom Behälter getrennte Werkzeughalter mittels des Griffes im Sitz für den Werkzeughalter positioniert werden; durch Einklappen des Griffes in den Innenraum des Werkzeughalters wird die beschriebene Fixierung betätigt, so dass der Werkzeughalter in seinem Sitz, also der ihn fixierend aufnehmenden Komponente wie beispielsweise dem Behälter fixiert ist.

Es ist klar, dass sichergestellt sein muss, dass das Mittel zum Fixieren in der jeweiligen Endposition, insbesondere in der Fixierungs-Endposition, verbleiben kann, auch und insbesondere wenn das Küchengerät in Betrieb ist. Dies kann durch ein weiteres mechanisches Mittel zur Hemmung der Rotation (z.B. Klemmvorrichtung, Rastnase, Fixierschraube) erreicht werden, und/oder dadurch, dass der Innenraum des Werkzeughalters nach Montage auf den Antrieb derart räumlich begrenzt wird, das ein unbeabsichtigtes Betätigen wie beispielsweise Herausrotieren des Mittels zum Fixieren nicht mehr möglich ist.

Durch das Kombinieren des Mittels zum Fixieren mit dem Mittel zum Entfernen wird ein Bauteil eingespart, und auch die von einem Benutzer durchzuführenden Griffbewegungen werden verringert, da kein Wechsel mehr zwischen unterschiedlichen Bauteilen beim Wechsel zwischen den beiden Funktionalitäten (Entriegeln und Entfernen bzw. Annähern und Verriegeln) nötig ist. Dadurch wird auch die Sicherheit in der Handhabung erhöht. Auch ist die Bedienung eines solchen kombinierten Mittels intuitiver.

Nach einer Ausführungsform der Verriegelungseinrichtung ist, wie bereits oben erwähnt, die den Werkzeughalter fixierend aufnehmende Komponente der Behälter (2). Der Vorteil einer solchen Konstruktion liegt in dem Verzicht auf weitere, den Werkzeughalter und den Behälter verbindende / überbrückende Bauteile. Allerdings bestehen Behälter für Küchengeräte häufig aus Glas oder Metall, so dass das Bereitstellen der oben erwähnten Aussparungen, in welche die Zapfen des Werkzeughalters eingreifen, oder auch anderer, mechanisch wirkender geometrischer Merkmale herausfordernd sein kann.

Daher weist nach einer anderen Ausführungsform die Verriegelungseinrichtung als die den Werkzeughalter fixierend aufnehmende Komponente zusätzlich einen an der unteren Außenseite des Behälters anbringbaren, eine Durchführöffnung aufweisenden Gegenhalter auf. In den Gegenhalter ist der Werkzeughalter einsetzbar, und er ist mit dem Gegenhalter fixierend verbindbar. Demnach stellt nach dieser Ausführungsform der Gegenhalter den Sitz für den Werkzeughalter bereit. Der Vorteil dieser Ausführungsform liegt darin, dass der Behälter selber keine geometrisch anspruchsvollen Merkmale zur Befestigung des Werkzeughalters aufweisen muss. Der Gegenhalter dient demnach auch als Adapter für den Werkzeughalter; somit sind auch unterschiedliche Arten von Werkzeughaltern leicht mit einem einheitlichen Behälter verbindbar, indem jeweils nur der Gegenhalter, nicht jedoch der Behälter angepasst werden muss.

Außerdem ist die Durchführöffnung des Gegenhalters vorzugsweise derart bemessen, dass die werkzeugseitigen Komponenten des Mischwerkzeugs vollständig durch sie hindurch passen. Dies ist vorteilhaft, da die werkzeugseitigen Komponenten des Mischwerkzeugs nicht von einer bestimmten Seite, sondern von beiden Seiten durch die Durchführöffnung hindurchgeführt werden können.

Sofern der Behälter eine zumindest ebenso wie die Durchführöffnung bemessene Bodenöffnung aufweist, kann der Gegenhalter am Behälter verbleiben, und der Werkzeughalter mit Mischwerkzeug kann von der unteren Außenseite des Behälters an diesen herangeführt und mit ihm verbunden werden. Dies stellt einen deutlichen Vorteil gegenüber dem Stand der Technik dar, bei welchem ein Einführen des Werkzeughalters mit Mischwerkzeug lediglich von der Innenseite des Behälters und durch die typischerweise kleine, nur die Rotationswelle durchlassende Bodenöffnung möglich ist. Mithin bietet diese Ausführungsform eine weitere Verbesserung der Sicherheit bei der Handhabung der erfindungsgemäßen Verriegelungseinrichtung.

Nach einer bevorzugten Ausführungsform der Verriegelungseinrichtung mit Gegenhalter ist zwischen Werkzeughalter und Gegenhalter eine umlaufende Dichtung angeordnet. Da beim Verriegeln des Werkzeughalters im Gegenhalter axial wirkende Druckkräfte bereitgestellt werden, können diese dazu genutzt werden, um die Dichtung zusammenzupressen, so dass sie die gewünschte und vorteilhafte Dichtwirkung entfalten kann. Selbstverständlich kann auch im Falle des Fehlens eines Gegenhalters eine Dichtung vorgesehen sein, welche sich dann vorzugsweise im Bereich der Stirnflächen von Behälterunterseite und Werkzeughalteroberseite befindet.

Vorzugsweise ist der Gegenhalter an der unteren Außenseite des Behälters aufschraubbar oder aufsteckbar. Derartige Befestigungen sind aus dem Stand der Technik bekannt und haben sich seit Langem bewährt. Behälter und Gegenhalter weisen dann entweder korrespondiere Schraubgewinde auf, oder werden beispielsweise nach Art eines Bajonettverschlusses rastend miteinander verbunden. Derartige Verbindungen sind robust, einfach herstellbar und gut reinigbar.

Während der Behälter auch aus Glas oder Metall bestehen kann, ist als Material für den Werkzeughalter und den ggf. vorhandenen Gegenhalter Kunststoff als Material bevorzugt, da die für die jeweiligen Verbindungen benötigten komplexen Strukturen in Kunststoff leichter herstellbar sind.

Nach einer weiteren Ausführungsform weist die Verriegelungseinrichtung an ihrer vom Behälter weg weisenden Unterseite, also antriebsseitig, Mittel zum Befestigen am Gehäuse des Küchengerätes auf. Mit anderen Worten, Werkzeughalter und/oder ggf. vorhandener Gegenhalter bieten die Möglichkeit, unmittelbar mit einer entsprechenden Aufnahme des Gehäuses lösbar zusammenzuwirken. Hierzu kann wiederum eine Schraub-, Steck- oder Rastverbindung eingesetzt werden. Vorzugsweise ist die Betätigung dieser Verbindung werkzeuglos durchführbar. Das Bereitstellen derartiger Verbindungsmittel erlaubt ein einfaches und sicheres Verbinden des Behälters mit dem Küchengerät.

Die Erfindung betrifft auch einen Behälter zum Zusammenwirken mit einer Verriegelungseinrichtung gemäß vorstehender Beschreibung. Demnach ist die Verriegelungseinrichtung an der unteren Außenseite des Behälters anbringbar, wobei die Verbindung wiederum nach vorstehend beschriebener Art vorzugsweise schraubend, steckend oder rastend erreichbar sein kann, und/oder die zur unmittelbaren Fixierung des Werkzeughalters notwendigen geometrischen Merkmale bereitstellt.

Vorzugsweise ist der Durchmesser der Umhüllenden des Mischwerkzeugs größer als der Durchmesser seiner Rotationswelle. Das bedeutet, dass der Behälter insbesondere dann vorteilhaft einsetzbar ist, wenn ein Mischwerkzeug vorliegt, welches werkzeugseitig deutlich breiter als antriebsseitig ist.

Der Behälter weist an seiner unteren Außenseite eine Bodenöffnung auf, und ist dadurch gekennzeichnet, dass die Größe der Bodenöffnung zumindest dem Durchmesser der Umhüllenden des Mischwerkzeugs entspricht, so dass durch diese Bodenöffnung die werkzeugseitigen Komponenten des Mischwerkzeugs von außen vollständig durchführbar sind. Wie bereits oben angesprochen, erlaubt diese Konstruktion ein Einsetzen des Werkzeughalters von außen. Ein umständliches Einsetzen desselben von Innen durch den Innenraum des Behälters ist hingegen nicht erforderlich. Auf die obigen Ausführungen hierzu wird verwiesen.

Schließlich betrifft die Erfindung auch ein Küchengerät zum Kneten, Mischen und/oder Zerkleinern von Zutaten, das besonders bevorzugt als Standgerät ausgebildet ist. Es umfasst einen Antrieb für das Mischwerkzeug, ein ihn aufnehmendes Gehäuse, und mindestens ein Mischwerkzeug, das beispielsweise Knethaken, Rührbesen oder eine Anordnung von Messern umfassen kann.

Das Küchengerät umfasst vorzugsweise außerdem einen Behälter gemäß vorstehender Beschreibung, also mit einer die werkzeugseitigen Komponenten des Mischwerkzeugs von außen vollständig durchlassenden Bodenöffnung.

Ferner umfasst das Küchengerät eine Verrieglungseinrichtung vorzugsweise gemäß obiger Beschreibung, die den Werkzeughalter und optional den Gegenhalter umfasst, und am Gehäuse anbringbar ist.

Ein derartiges Küchengerät weist den Vorteil der leichten Handhabbarkeit beim Ein- und Ausbau des Mischwerkzeuges in den bzw. aus dem Behälter auf. Auch die Sicherheit und Bequemlichkeit für den Benutzer werden erhöht.

### Kurzbeschreibung der Zeichnungen

- Fig. 1: zeigt eine perspektivische Explosionszeichnung der bevorzugten Ausführungsform der erfindungsgemäßen Verriegelungseinrichtung;
- Fig. 2: zeigt die Verriegelungseinrichtung in fixiertem Zustand dargestellt;
- Fig. 3: zeigt die Verriegelungseinrichtung in entriegeltem Zustand;
- Fig. 4: zeigt den aus dem Gegenhalter herausgezogenen Werkzeughalter mit Mischwerkzeug und
- Fig. 5: zeigt in einer anderen Perspektive die in Fig. 2 bereits dargestellte Verriegelungseinrichtung in fixiertem Zustand.

### Ausführliche Beschreibung anhand eines Ausführungsbeispiels

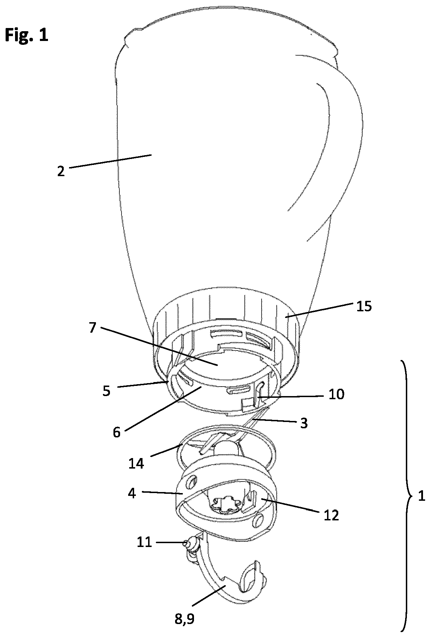

Fig. 1 zeigt eine perspektivische Explosionszeichnung der bevorzugten Ausführungsform der erfindungsgemäßen Verriegelungseinrichtung 1, um an einem Behälter 2 ein Mischwerkzeug 3 zu befestigen. Demnach ist das Mischwerkzeug 3 in einem Werkzeughalter 4 angeordnet und kann in diesem frei rotieren. An der Werkzeugseite des Werkzeughalters sind beispielhaft Messer als Mischwerkzeug angeordnet. Im Bild ist die typische Einbaulage dargestellt, bei welcher sich der Werkzeughalter 4 unterhalb des Behälters 2 befindet.

Das Mittel zum Fixieren 8 und das Mittel zum Entfernen 9 sind integriert bereitgestellt und als ein bogenförmiger Griff ausgestaltet. Dieser weist an seinen beiden Enden Zapfen 11 auf, die im Werkzeughalter 4 rotierend und exzentrisch lagerbar sind. Gut erkennbar sind die im Werkzeughalter 4 befindlichen beiden Aufnahmen für diese Lagerung, sowie die exzentrische Anordnung der Zapfen 11 auf der jeweiligen Lagerung. Der Griff ist zudem so bemessen, das er im Innenraum 12 des Werkzeughalters 4 aufnehmbar ist.
An der unteren Außenseite des Behälters 2 ist ein ringförmiger Gegenhalter 5 als den Werkzeughalter 4 fixierend aufnehmende Komponente angeordnet. Der Gegenhalter 5 ist fest, aber lösbar mit dem Behälter verbunden (Verbindung nicht dargestellt) und weist mit den Zapfen 11 korrespondierende Aussparungen 10 auf. Der Gegenhalter 5 bildet somit einen Sitz für den Werkzeughalter 4, der durch das Mittel zum Fixieren 8 im Gegenhalter 5 fixierbar ist. Zur sicheren Handhabung des Gegenhalters 5 beim Befestigen am Behälter 2 weist ersterer eine Rändelung 15 gegen Abrutschen auf. Zudem ist die Durchführöffnung 6 des Gegenhalters 5 so bemessen, dass die werkzeugseitigen Komponenten des Mischwerkzeugs 3 durch ihn hindurchpassen.

Zwischen Gegenhalter 5 und Werkzeughalter 4 ist eine Dichtung 14 angeordnet. Bei einem im Gegenhalter 5 fixierten Werkzeughalter 4 wird die Dichtung 14 geklemmt und stellt so die erwünschte Dichtwirkung bereit. Sie ist leicht abnehmbar und somit reinig- und austauschbar.

An der Antriebsseite des Werkzeughalters 4 sind Strukturen (ohne Bezugszeichen) angeordnet, welche mit einem Antrieb (nicht dargestellt) zusammenwirken. Wie aus der Fig. 1 ersichtlich, ist an der Unterseite des Behälters 2 eine Bodenöffnung 7 vorhanden. Diese ist so bemessen, dass die werkzeugseitigen Komponenten des Mischwerkzeugs vollständig durch sie hindurchpassen. Somit kann der Werkzeughalter 4 mit montiertem Mischwerkzeug 3 von der unteren Außenseite des Behälters 2 her kommend in diesen eingebaut werden.

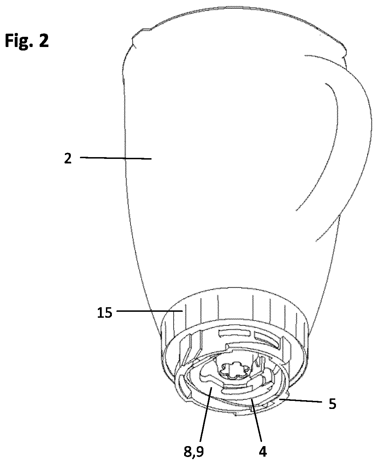

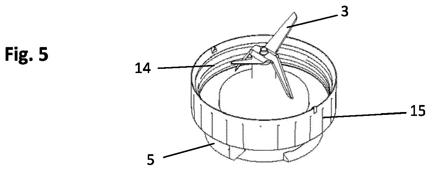

In Fig. 2 ist die Verriegelungseinrichtung 1 in fixiertem Zustand gezeigt. Wie erkennbar ist der bogenförmige Griff, der zugleich Mittel zum Fixieren 8 und Mittel zum Entfernen 9 ist, in den Innenraum 12 des Werkzeughalters 4 eingeklappt und dort vollständig aufgenommen. Die Zapfen 11 ragen in die korrespondierenden Aussparungen 10 des Gegenhalters 5, der in der gezeigten Ausführungsform die den Werkzeughalter 4 aufnehmende Komponente ist. Durch die eingeklappte Lage des Griffes sind die Zapfen 11 in den Aussparungen 10 so angeordnet, dass ein selbstständiges Lösen des Werkzeughalters 4 aus dem Gegenhalter 5 ausgeschlossen ist. Fig. 5 zeigt, wie das Werkzeug im fixierten Zustand der Verriegelungseinrichtung 1 angeordnet ist. Weiter ist in Fig. 5 ein, in diesem Ausführungsbeispiel speziell als Gewinde ausgebildetes Mittel 14 zum Befestigen des Gegenhalters am Behälter 2 (der mit einem nicht dargestellten Gegengewinde ausgestattet ist) zu sehen.

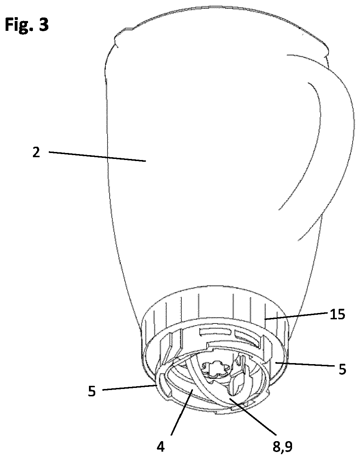

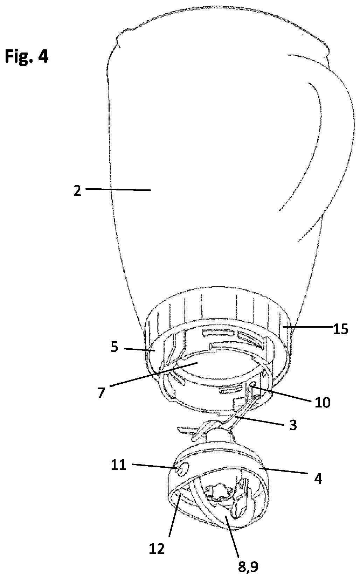

Durch das in Fig. 3 gezeigte Herausklappen des Griffes befindet sich die Verriegelungseinrichtung 1 in entriegeltem Zustand. Die Zapfen 11 befinden sich nicht länger im selbstständig unlösbaren Eingriff mit den korrespondierenden Aussparungen 10 des Gegenhalters 5, so dass nunmehr ein Entfernen des Werkzeughalters 4 mit an ihm montiertem Mischwerkzeug 3 möglich ist. Dies ist in Fig. 4 gezeigt, in welcher der aus dem Gegenhalter 5 herausgezogene Werkzeughalter 4 mit Mischwerkzeug 3 dargestellt ist. Auch hier ist die ausreichend groß bemessene Bodenöffnung 7 des Behälters 2 gut erkennbar. Aufgrund der erfindungsgemäßen Konstruktion kann der Werkzeughalter 4 mit montiertem Mischwerkzeug 3 von der Außenseite des Behälters 2 angebracht werden; ein Eingriff in den Innenraum des Behälters 2 ist nicht notwendig.

### Bezugszeichenliste

- 1: Verriegelungseinrichtung
- 2: Behälter, fixierend aufnehmende Komponente
- 3: Mischwerkzeug
- 4: Werkzeughalter mit Werkzeugseite und Antriebsseite
- 5: Gegenhalter, fixierend aufnehmende Komponente
- 6: Durchführöffnung
- 7: Bodenöffnung
- 8: Mittel zum Fixieren
- 9: Mittel zum Entfernen
- 10: korrespondierende Aussparungen
- 11: Zapfen
- 12: Innenraum des Werkzeughalters
- 13: Mittel zum Befestigen
- 14: Dichtung
- 15: Rändelung
- X: axiale Richtung

## Patentansprüche

1. Verriegelungseinrichtung (1) zum Fixieren eines Mischwerkzeugs (3) im Behälter (2) eines Küchengerätes, wobei die Verriegelungseinrichtung (1) einen Werkzeughalter (4), in dem das Mischwerkzeug (3) rotierbar gelagert ist, sowie ein Mittel zum Fixieren (8) des Werkzeughalters (4) umfasst, wobei der Werkzeughalter (4) außerdem ein zum Entfernen des Werkzeughalters (4) vom Behälter (2) vorgesehenes Mittel zum Entfernen (9) aufweist, **dadurch gekennzeichnet, dass** das Mittel zum Entfernen (9) ein mit dem Werkzeughalter (4) rotierbar verbundener und aus diesem herausklappbarer Griff ist.

2. Verriegelungseinrichtung (1) nach Anspruch 1, wobei das Mittel zum Entfernen (9) ein Axialkräfte aufnehmendes und an den Werkzeughalter (4) weiterleitendes mechanisches Bauteil ist.

3. Verriegelungseinrichtung (1) nach Anspruch 2, wobei das Mittel zum Entfernen (9) ein in einem peripheren Bereich eines Innenraums (12) des Werkzeughalters (4) aufbewahrbarer, mit dem Werkzeughalter (4) verbundener Griff ist.

4. Verriegelungseinrichtung (1) nach einem der Ansprüche 1 bis 3, wobei das Mittel zum Fixieren (8) mechanisch mit einer den Werkzeughalter (4) fixierend aufnehmenden Komponente (2, 5) zusammenwirkt.

5. Verriegelungseinrichtung (1) nach Anspruch 4, wobei das Mittel zum Fixieren (8) radial den Werkzeughalter (4) überragende, zum Eingriff in korrespondierende Aussparungen (10) der ihn fixierend aufnehmenden Komponente (2, 5) vorgesehene, in ihm rotierbar und exzentrisch gelagerte Zapfen (11) aufweist.

6. Verriegelungseinrichtung (1) nach einem der Ansprüche 1 bis 5, wobei das Mittel zum Fixieren (8) und das Mittel zum Entfernen (9) ein gemeinsames Bauteil sind.

7. Verriegelungseinrichtung (1) nach einem der vorhergehenden Ansprüche, wobei die den Werkzeughalter (4) fixierend aufnehmende Komponente der Behälter (2) ist.

8. Verriegelungseinrichtung (1) nach einem der Ansprüche 1 bis 7, wobei die Verriegelungseinrichtung (1) ferner einen an der unteren Außenseite des Behälters (2) anbringbaren, eine Durchführöffnung (6) aufweisenden Gegenhalter (5), in den der Werkzeughalter (4) einsetzbar und mit dem der Werkzeughalter (4) fixierend verbindbar ist, umfasst.

9. Verriegelungseinrichtung (1) nach Anspruch 8, wobei die Durchführöffnung (6) des Gegenhalters (5) die werkzeugseitigen Komponenten des Mischwerkzeugs (3) vollständig durchlassend bemessen ist.

10. Verriegelungseinrichtung (1) nach Anspruch 8 oder 9, wobei zwischen Werkzeughalter (4) und Gegenhalter (5) eine umlaufende Dichtung (14) angeordnet ist.

11. Verriegelungseinrichtung (1) nach einem der Ansprüche 8 bis 10, wobei der Gegenhalter (5) an der unteren Außenseite des Behälters (2) aufschraubbar oder aufsteckbar ist.

12. Verriegelungseinrichtung (1) nach einem der vorhergehenden Ansprüche, wobei dieselbe an ihrer vom Behälter (2) weg weisenden Unterseite Mittel zum Befestigen (13) am Gehäuse des Küchengerätes aufweist.

13. Behälter (2) mit einer Verriegelungseinrichtung (1) gemäß einem der vorhergehenden Ansprüche, wobei die Verriegelungseinrichtung (1) an seiner unteren Außenseite anbringbar ist, und wobei der Durchmesser der Umhüllenden des Mischwerkzeugs (3) größer als der Durchmesser seiner Rotationswelle ist, wobei der Behälter (2) an seiner unteren Außenseite eine Bodenöffnung (7) aufweist, deren Größe zumindest dem Durchmesser der Umhüllenden entspricht, so dass die werkzeugseitigen Komponenten des Mischwerkzeugs (3) von außen vollständig durch die Bodenöffnung (7) einführbar sind.

14. Küchengerät zum Kneten, Mischen und/oder Zerkleinern von Zutaten, umfassend einen Antrieb, ein ihn aufnehmendes Gehäuse, mindestens ein Mischwerkzeug (3), sowie einen Behälter (2) gemäß Anspruch 13.

## Claims

1. Locking device (1) for fixing a mixing tool (3) in the container (2) of a kitchen appliance, wherein the locking device (1) comprises a tool holder (4), in which the mixing tool (3) is rotatably mounted, and a fixing means (8) of the tool holder (4), wherein the tool holder (4) also has a releasing means (9) provided for releasing the tool holder (4) from the container (2), **characterised in that** the releasing means (9) is a grip which is rotatably connected to the tool holder (4) and which is able to be folded out of said tool holder.

2. Locking device (1) according to claim 1, wherein the releasing means (9) is a mechanical component receiving an axial force and forwarding said axial force to the tool holder (4).

3. Locking device (1) according to claim 2, wherein the releasing means (9) is a grip which is able to be stored in a peripheral region of an interior (12) of the tool holder (4) and connected to the tool holder (4).

4. Locking device (1) according to one of claims 1 to 3, wherein the fixing means (8) cooperates mechanically with a component (2, 5) fixedly receiving the tool holder (4).

5. Locking device (1) according to claim 4, wherein the fixing means (8) comprises pins (11) protruding radially over the tool holder (4), provided for engagement in corresponding recesses (10) of the component (2, 5) fixedly receiving the tool holder, and rotatably and eccentrically mounted therein.

6. Locking device (1) according to one of claims 1 to 5, wherein the fixing means (8) and the releasing means (9) are a common component.

7. Locking device (1) according to one of the preceding claims, wherein the component fixedly receiving the tool holder (4) is the container (2).

8. Locking device (1) according to one of claims 1 to 7, wherein the locking device (1) also comprises a counter support (5) which is able to be attached to the lower outer side of the container (2) comprising a through-opening (6), in which the tool holder (4) is able to be inserted and to which the tool holder (4) is able to be fixedly connected.

9. Locking device (1) according to claim 8, wherein the through-opening (6) of the counter support (5) is dimensioned to permit the tool-side components of the mixing tool (3) to pass through completely.

10. Locking device (1) according to claim 8 or 9, wherein a circumferential seal (14) is arranged between the tool holder (4) and the counter support (5).

11. Locking device (1) according to one of claims 8 to 10, wherein the counter support (5) is able to be screwed or plugged onto the lower outer side of the container (2).

12. Locking device (1) according to one of the preceding claims, wherein said locking device on its lower side facing away from the container (2) comprises means for fastening (13) to the housing of the kitchen appliance.

13. Container (2) comprising a locking device (1) according to one of the preceding claims, wherein the locking device (1) is able to be attached to the lower outer side thereof, and wherein the diameter of the casing of the mixing tool (3) is larger than the diameter of its rotational shaft, wherein the container (2) comprises a bottom opening (7) on its lower outer side, the size of which opening corresponding at least to the diameter of the casing, such that the tool-side components of the mixing tool (3) are able to be introduced completely through the bottom opening (7) from the outside.

14. Kitchen appliance for kneading, mixing and/or grinding ingredients, comprising a drive, a housing that accommodates the drive, at least one mixing tool (3), and a container (2) according to claim 13.

## Revendications

1. Dispositif de verrouillage (1) destiné à immobiliser un outil de mélange (3) au sein du récipient (2) d'un appareil de cuisine, dans lequel le dispositif de verrouillage (1) comprend un porte-outil (4), dans lequel l'outil de mélange (3) est mis en place rotatif, ainsi qu'un moyen destiné à immobiliser (8) le porte-outil (4), dans lequel le porte-outil (4) présente en outre un moyen destiné à éloigner (9) prévu pour éloigner le porte-outil (4) par rapport au récipient (2), **caractérisé en ce que** le moyen destiné à éloigner (9) est une anse reliée rotative au porte-outil (4) et pouvant être basculée à partir de celui-ci.

2. Dispositif de verrouillage (1) selon la revendication 1, dans lequel le moyen destiné à éloigner (9) est un élément structurel mécanique recueillant des forces axiales et les redirigeant au niveau du porte-outil (4).

3. Dispositif de verrouillage (1) selon la revendication 2, dans lequel le moyen destiné à éloigner (9) est une anse reliée au porte-outil (4) et pouvant être remisée dans un secteur périphérique d'un espace intérieur (12) du porte-outil (4).

4. Dispositif de verrouillage (1) selon l'une quelconque des revendications 1 à 3, dans lequel le moyen destiné à immobiliser (8) collabore mécaniquement avec un composant (2, 5) accueillant le porte-outil (4) de manière à l'immobiliser.

5. Dispositif de verrouillage (1) selon la revendication 4, dans lequel le moyen destiné à immobiliser (8) présente des tenons (11) faisant saillie de manière radiale par rapport au porte-outil (4), prévus pour venir en prise dans des évidements correspondants (10) des composants (2, 5) accueillant ledit porte-outil de manière à l'immobiliser, et mis en place excentriques et rotatifs au sein dudit porte-outil.

6. Dispositif de verrouillage (1) selon l'une quelconque des revendications 1 à 5, dans lequel le moyen destiné à immobiliser (8) et le moyen destiné à éloigner (9) constituent un élément structurel commun.

7. Dispositif de verrouillage (1) selon l'une quelconque des revendications précédentes, dans lequel le composant accueillant le porte-outil (4) de manière à l'immobiliser est le récipient (2).

8. Dispositif de verrouillage (1) selon l'une quelconque des revendications 1 à 7, dans lequel le dispositif de verrouillage (1) comprend en outre un serre-pièce (5), pouvant être fixé au niveau du côté extérieur inférieur du récipient (2) et présentant une ouverture traversante (6), au sein duquel le porte-outil (4) peut être inséré et grâce auquel le porte-outil (4) peut être relié de manière à l'immobiliser.

9. Dispositif de verrouillage (1) selon la revendication 8, dans lequel l'ouverture traversante (6) du serre-pièce (5) est dimensionnée de manière à laisser complètement passer les composants de l'outil de mélange (3) qui sont situés côté outil.

10. Dispositif de verrouillage (1) selon la revendication 8 ou 9, dans lequel une garniture d'étanchéité (14) circulaire est agencée entre le porte-outil (4) et le serre-pièce (5).

11. Dispositif de verrouillage (1) selon l'une quelconque des revendications 8 à 10, dans lequel le serre-pièce (5) peut être vissé ou enfiché au niveau du côté extérieur inférieur du récipient (2).

12. Dispositif de verrouillage (1) selon l'une quelconque des revendications précédentes, dans lequel ledit dispositif présente, au niveau de son côté inférieur se détournant du récipient (2) un moyen d'accroche (13) au corps de l'appareil de cuisine.

13. Récipient (2) muni d'un dispositif de verrouillage (1) selon l'une quelconque des revendications précédentes, dans lequel le dispositif de verrouillage (1) peut être fixé au niveau de son côté extérieur inférieur, et dans lequel le diamètre des éléments d'enveloppe de l'outil de mélange (3) est supérieur au diamètre de son arbre de rotation, dans lequel le récipient (2) présente au niveau de son côté extérieur inférieur une ouverture de fond (7) dont la taille correspond au moins au diamètre des éléments d'enveloppe, de sorte que les composants de l'outil de mélange (3) qui sont situés côté outil peuvent être introduits complètement à travers l'ouverture de fond (7) depuis l'extérieur.

14. Appareil de cuisine destinée à malaxer, mélanger et/ou broyer des ingrédients, comprenant un entraînement, un corps accueillant ledit entraînement, au moins un outil de mélange (3), ainsi qu'un récipient (2) selon la revendication 13.
